# EUROPÄISCHE PATENTANMELDUNG

(11) **EP 2 368 423 A1**
(43) Veröffentlichungstag der Anmeldung: **28.09.2011**
(21) Anmeldenummer: 10016132.2
(22) Anmeldetag: 28.12.2010
(51) Int. Cl.: A01G 17/14

(54) **Weinbaupfahl**

(30) Priorität: 28.12.2009 DE 102009060610
(71) Anmelder: Bayer, Erich, 67283 Obrigheim (DE); Hemer, Hans-Peter, 67550 Worms / Rhein (DE)
(72) Erfinder: Bayer, Erich, 67283 Obrigheim (DE); Hemer, Hans-Peter, 67550 Worms / Rhein (DE)
(74) Vertreter: Jendricke, Susann

(57) **Zusammenfassung**

Es wird ein Weinbaupfahl mit einem säulenförmigen Grundkörper (1) aus geformtem Blech angegeben, an dem innenliegende Haken (2) zur temporären Aufnahme eines Drahtes (3) vorgesehen sind, wobei die Haken (2) als in etwa L-förmige Ausstanzungen an den Seiten des Grundkörpers ausgebildet sind und einen ersten Schenkel (4), einen zweiten Schenkel (5) sowie einen dritten Schenkel (6) aufweisen, wobei sich der erste Schenkel (4) von der Außenkante des Grundkörpers (1) in Richtung seines Inneren erstreckt, wobei sich der zweite Schenkel (5) parallel zur Längsrichtung des Grundkörpers (1) erstreckt, wobei sich der dritte Schenkel (6) vom Ende des zweiten Schenkels (5) in Richtung der Außenkante des Grundkörpers (1) erstreckt und wobei der dritte Schenkel (6) am der Außenkante zugewandten Ende seiner dem ersten Schenkel (4) zugewandten Seite eine Ausbuchtung aufweist. Der Weinbaupfahl soll dahingehend verbessert werden, dass der Verbleib des Drahtes, insbesondere unter Umwelteinflüssen, im Haken gesichert wird. Dabei soll das Einlegen und Herausnehmen der Drähte aus den Ausnehmungen genauso komfortabel und schnell wie bisher möglich sein. Die Aufgabe wird dadurch gelöst, dass die Ausbuchtung einen Rundbogen (R4) zur Aufnahme des Drahtes (3) umfasst, dass der Rundbogen (R4) einen Radius aufweist, der den Radius des aufzunehmenden Drahtes (3) so gering übersteigt, dass zwischen dem Draht (3) und dem Rundbogen (R4) kaum ein Spiel herrscht.

## Beschreibung

Die Erfindung betrifft einen Weinbaupfahl mit einem säulenförmigen Grundkörper aus geformtem Blech, an dem innenliegende Haken zur temporären Aufnahme eines Drahtes vorgesehen sind, wobei die Haken als in etwa L-förmige Ausstanzungen an den Seiten des Grundkörpers ausgebildet sind und einen ersten Schenkel, einen zweiten Schenkel sowie einen dritten Schenkel aufweisen, wobei sich der erste Schenkel von der Außenkante des Grundkörpers in Richtung seines Inneren erstreckt, wobei sich der zweite Schenkel parallel zur Längsrichtung des Grundkörpers erstreckt, wobei sich der dritte Schenkel vom Ende des zweiten Schenkels in Richtung der Außenkante des Grundkörpers erstreckt und wobei der dritte Schenkel am der Außenkante zugewandten Ende seiner dem ersten Schenkel zugewandten Seite eine Ausbuchtung aufweist.

Weinbaupfähle dienen der Halterung eines Drahtes, und unterstützen das Pflanzwachstum. Der Weinbaupfahl der in Rede stehenden Art ergibt sich aus DE 10 2007 044 267 A1. Dieser bekannte Weinbaupfahl weist über seine Länge verteilt in mehreren Etagen innenliegende Haken auf, die es gestatten, die Drähte nach Bedarf leicht ein- und auszuhängen, was für die Pflege des Weines von großem Vorteil ist. Der bekannte Weinbaupfahl besteht aus einem mehrfach gebogenen Blech, die Biegung könnte man im Querschnitt grob als U-Form beschreiben, wobei aber sowohl Basis als auch Schenkel der U-Form nochmals Verformungen aufweisen. Insbesondere an den U-Schenkein sind sogenannte Sicken ausgeformt. Gerade in diesen Sicken, im Blech des säulenförmigen Grundkörpers des Weinbaupfahls sind die Haken innenliegend als in etwa L-förmige Ausstanzungen gebildet und weisen drei Schenkel auf. Der erste Schenkel stellt im Grunde den "Schenkelabschnitt" der L-Form dar und erstreckt sich nach innen. Der zweite Schenkel stellt im Grunde den "Basis- oder Fußabschnitt" der L-Form dar und erstreckt sich parallel zur Längsrichtung des Pfahls. Der dritte Schenkel könnte als Serife des Basis- oder Fußabschnitts der L-Form interpretiert werden und erstreckt sich nach außen, nahezu parallel zum ersten Schenkel. Durch die Ausstanzung ist ein Kanal geschaffen, der eine Hakennase umschließt.

Problematisch ist folgendes: Der Draht ist gewöhnlich im gespannten Zustand innerhalb des dritten, am nächsten zum Boden beabstandeten Schenkels der Ausstanzung angeordnet. Der Draht hat dann das Bestreben, diese Wunschposition zu verlassen, wenn der Weinbaupfahl in unebenen Boden eingelassen ist, was natürlich meist der Fall ist. Was die Bodenunebenheiten betrifft, so weisen die meisten Weinberge Mulden auf, was dazu führen kann, dass sich die Drähte im Bereich der Mulde beim Spannen von der tiefsten Stelle der Ausstanzungen - dritter Schenkel - abheben und unter dem Einfluss pulsierender, seitlicher Windbelastungen aus den Ausstanzungen herausarbeiten und aus dem ersten Schenkel austreten. Dies kann im Ergebnis zu schwierig zu behebenden zu Schäden an Reben oder Sträuchern führen. Das Bestreben des Drahtes, sich von der gewünschten Position im zum Boden weisenden dritten Schenkel zu verlassen, kann auch durch das Gefälle des Weinberges im Ganzen gegeben sein.

Nun sieht die Hakennase gemäß DE 10 2007 044 267 A1 zwar einen geringfügigen Hintergriff vor, der als kleine Ausbuchtung Bestandteil des dritten Schenkels ist, jedoch ist dieser wenig geeignet, den nach oben strebenden Draht wirkungsvoll zurückzuhalten. Der Hintergriff der Hakennase bzw. die Ausbuchtung des dritten Schenkels erstreckt sich sehr nahe zum Kamm der Sicke, so dass die Wahrscheinlichkeit, dass sich der Draht in seinem Bestreben, sich wegen der Zugspannung nach oben zum ersten Schenkel zu bewegen, am Hintergriff bzw. an der Ausbuchtung des dritten Schenkels vorbei bewegt, sehr hoch ist. Der dünne Draht hat im dritten Schenkel und im Hintergriff genügend Platz sich vom Wind beeinflusst vibrierend zu bewegen und findet den Weg zum ersten Schenkel und damit zum Ausgang aus der Ausstanzung sehr häufig. Die Praxis hat dies auch bestätigt. Die Wirksamkeit der Rückhaltefunktion des Hakens ist demnach verbesserungswürdig.

Aus Dokument FR 2331952 A1 ist ein Weinbaupfahl bekannt, bei dem die Drahtzurückhaltungsteile / an der Außenseite angebracht sind. Auch bei den dortigen Haken ist ein Kanal vorgesehen, in den der Draht eingeführt wird, jedoch steht auch dort dem dünnen Draht soviel Freiraum im dritten Schenkel und dem dortigen Hintergriff zur Verfügung, dass er die Wunschposition bei Bodenunebenheiten, bei Wind und aufgrund der Zugspannung leicht verlassen kann.

Das Dokument DE 29912475 U1 zeigt einen Wein- oder Obstbaupfahl, wobei ganz offensichtlich der Radius des Drahtes im Verhältnis zur Drahtaufnahme äußerst klein ist. Der Draht hat allen erdenklichen Bewegungsspielraum und kann sich bei Windeinwirkung / Bodenunebenheiten unkontrolliert bewegen und sich aus der Ausstanzung herausarbeiten.

Ausgehend von dem aus DE 102007044267 A1 bekannten Stand der Technik liegt der Lehre der vorliegenden Patentanmeldung die Aufgabe zugrunde, einen Weinbaupfahl dahingehend zu verbessern, dass der Verbleib des Drahtes, insbesondere unter Umwelteinflüssen, im Haken gesichert wird. Dabei soll das Einlegen und Herausnehmen der Drähte aus den Ausnehmungen genauso komfortabel und schnell wie bisher möglich sein.

Die voranstehende Aufgabe wird durch die Merkmale des Patentanspruches 1 gelöst. Danach ist ein Weinbaupfahl der in Rede stehenden Art derart ausgestaltet, dass die Ausbuchtung einen Rundbogen zur Aufnahme des Drahtes umfasst, dass der Rundbogen einen Radius aufweist, der den Radius des aufzunehmenden Drahtes so gering übersteigt, dass zwischen dem Draht und dem Rundbogen kaum ein Spiel herrscht.

Ausgehend von DE 10 2007 044 267 A1 ist erkannt worden, dass es dort trotz Hintergriff der Hakennase bzw. Ausbuchtung des dritten Schenkels der Ausstanzung dazu kommen kann, dass der Draht aus der Ausstanzung herausfällt oder herausgeweht wird. Erfindungsgemäß ist erkannt worden, dass im Fall, dass der Draht nach oben strebt für den Draht genügend Freiraum zur Verfügung steht, bereits bestehende Rückhalteeinrichtungen zu überwinden. Davon ausgehend ist weiter erfindungsgemäß erkannt worden, dass der Verbleib des Drahtes in der Ausstanzung unabhängig von äußeren Einflüssen wünschenswert und verbesserungswürdig ist. Hierzu ist weiter erfindungsgemäß erkannt worden, dass die Ausbuchtung einen Rundbogen umfasst, der den Draht aufnimmt und nur einen geringfügig größeren Radius aufweist als der Draht. Der Draht soll also, wenn er seine Wunschposition verlässt, im Rundbogen aufgefangen werden und dort verbleiben, quasi im Rundbogen festsitzen und dort kaum Spiel darin haben. Die Abmessungen sind also aufeinander abgestimmt und der Draht SITZT im Rundbogen. Die Bewegungsfreiheit des Drahtes ist durch die Abstimmungen der Geometrie des Rundbogens auf den Radius des Drahtes so eingeschränkt, dass der Draht wirksam behindert ist, die Ausstanzung zu verlassen.

Nach einer bevorzugten Ausführungsform könnte der dritte Schenkel einen Bogen aufweisen, der sich vom Ende des zweiten Schenkels zum Rundbogen erstreckt. Hierdurch wird für den Draht - sofern er die Wunschposition verlässt, eine gewisse Führung geschaffen, an der sich der Draht abrollen kann. An den Rundbogen könnte eine Stufe anschließen, die als weiteres Hindernis gegen das Austreten des Drahtes aus dem Rundbogen dient.

Zur Unterstützung des Vorhabens, dass der sich unter den oben geschilderten Umständen von der Wunschposition am tiefsten Punkt des dritten Schenkels lösende und nach oben strebende Draht zum Rundbogen des dritten Schenkels gelangt, könnte der Scheitelpunkt des Bogens in etwa genauso weit von der Außenkante des Grundkörpers im Bereich einer Sicke entfernt sein wie von der Außenkante des Grundkörpers im Bereich einer an die Sicke anschließenden Biegung. Wenn dann auch noch die an den Rundbogen anschließende Stufe des dritten Schenkels in etwa mit dem Scheitelpunkt fluchtet oder sich vorzugsweise etwas stärker zur Biegung erstreckt würde der aufsteigende Draht keine andere Chance mehr haben, als gegen die Stufe zu stoßen und den Impuls zu erhalten, in den Rundbogen zu gleiten.

Wenn allerdings Windeinflüsse den Draht von dem Rundbogen des dritten Schenkels abhalten, hält die Erfindung in diversen Ausführungsbeispielen noch weitere Rückhaltemechanismen parat.

Zum einen könnte der Bogen des dritten Schenkels aus zwei zusätzlichen Rundbögen und einer zusätzlichen Stufe gebildet sein. Dabei könnte die Stufe zwischen dem zweiten Schenkel und dem zusätzlichen ersten Rundbogen des dritten Schenkels angeordnet sein und als Hindernis gegen das Austreten des Drahtes aus diesem Rundbogen bzw. dem Bogen dienen. Der zusätzliche zweite Rundbogen könnte sich zwischen dem zusätzlichen ersten Rundbögen und dem Rundbogen erstrecken, der vornehmlich für das Aufnehmen des Drahtes innerhalb des dritten Schenkels vorgesehen ist, erstrecken. Dieser zusätzliche zweite Rundbogen könnte an der Basis Kerbwirkungen verhindern und die Robustheit der Hakennasen gegen unerwünschte Verbiegungen verbessern.

Gemäß einem besonders bevorzugten Ausführungsbeispiel könnte der Bogen bzw. der zusätzliche erste Rundbogen in einem Abstand vor einer Rückwand des zweiten Schenkels in einer Anschlagfläche der dortigen Stufe enden. Die Stufe könnte sich parallel zur Rückwand des zweiten Schenkels erstrecken, so dass der Draht, wenn er aus der Wunschposition beim Scheitelpunkt des Bogens des dritten Schenkels gelangen sollte auch von dieser Stufe einen Lenkungsimpuls in Richtung des Rundbogens des dritten Schenkels erhält und dort aufgefangen / aufgenommen wird. Der erwähnte Abstand könnte vorzugsweise das 0,5 bis 1 - fache der Dicke des Drahtes betragen. Hierdurch wird verhindert, dass ein in die Ausstanzung des Weinbaupfahls eingelegter Draht beim vertikalen Anheben in den Bereich des zweiten oder gar des ersten Schenkels der Ausstanzung gelangt und unerwünscht aus der Ausstanzung herausfällt.

Auch der zweite Schenkel könnte mit Rundbogen ausgestattet sein, von denen einer im Sinne einer Führung zur soeben beschriebenen Stufe des Bogens führt sowie Kerbwirkungen verhindert und die Tragfähigkeit des Weinbaupfahles insgesamt verbessert.

Wenn die Windeinflüsse jedoch so stark sind, dass die beiden Stufen den Draht nicht in den Rundbogen des dritten Schenkels zurückzudrängen vermögen, könnte zwischen dem ersten Schenkel und dem zweiten Schenkel ein weiterer Rundbogen vorgesehen sein, der ebenso wie der Rundbogen des dritten Schenkels einen Radius aufweist, der den Radius des aufzunehmenden Drahtes so gering übersteigt, dass zwischen dem Draht und dem Rundbogen kaum ein Spiel herrscht. Auch hier gilt: So wenig Bewegungsfreiheit wie möglich garantiert den Verbleib des Drahtes auch in diesem weiteren Rundbogen als letzte Rückhaltestation vor dem Ausgang der Ausstanzung.

Der hier in Rede stehende weitere Rundbogen könnte mit seinem Scheitelpunkt in etwa genauso weit von der Außenkante des Grundkörpers im Bereich einer Sicke wie von der Außenkante des Grundkörpers im Bereich der schon erwähnten, an die Sicke anschließenden Vertiefung entfernt sein. Dies hat zum Vorteil, dass der vom dritten Schenkel kommende Draht, vorzugsweise über einen zusätzlichen Rundbogen am zweiten Schenkel zum hier in Rede stehenden aufnehmenden Rundbogen geleitet, auf seinem natürlichen Weg innerhalb der Ausstanzung bzw. innerhalb des durch die Schenkel quasi gebildeten Kanals, direkt in den aufnehmenden Rundbogen gelangt.

So wie die bisher vorgestellten Stufen quasi ein Labyrinth erzeugen und den Draht hindern sollen, den dritten Schenkel zu verlassen, könnte nun auch bezüglich des zwischen ersten und zweiten Schenkel vorgesehenen Rundbogens eine Stufe ausgebildet sein. Diese Stufe könnte den hier in Rede stehenden weiteren Rundbogen vom ersten Schenkel abgewandt in Richtung des zweiten Schenkels abschließen und dazu beitragen, einen Austritt des Drahtes aus dem Rundbogen zu verhindern. Selbstverständlich könnte der aufnehmende Rundbogen auch durch eine weitere Stufe in Richtung des ersten Schenkels flankiert sein.

Der Radius des Drahtes beträgt ca. 0,4 mm bis ca. 1,1 mm, bzw. der Durchmesser ca. 0,8 mm bis ca. 2,2 mm. Damit der gewünschte, weitere Bewegungen des Drahtes verhindernde Sitz realisiert werden kann, könnte der Radius der beiden aufnehmenden Rundbögen im dritten Schenkel einerseits und zwischen erstem und zweiten Schenkel andererseits, den Radius des Drahtes um ca. 0,05 bis ca. 1,2 mm, vorzugsweise um ca. 0,1 bis ca. 0,8 mm, höchst vorzugsweise um ca. 0,3 bis ca. 0,5 mm, übersteigen.

Je geringer das aus der geometrischen Differenz zwischen Draht und aufnehmendem Rundbogen resultierende Spiel, desto besser ist der Sitz und die Behinderung jeder weiteren Drahtbewegung. Das Spiel darf allerdings nicht so gering sein, dass das Einlegen des Drahtes unnötig erschwert wird. Auch bei sehr langen Weinbergen mit einer Zeilenlänge von mindestens 300 m und mehreren aufeinanderfolgenden Mulden ist so eine besonders sichere Aufnahme der Drähte in den Aufnahmen der Weinbaupfähle auf der gesamten Länge gewährleistet.

Auch die Rundbögen des dritten und zweiten Schenkels, die keine Aufnahmefunktion haben, sondern den Draht im geschilderten Fall nur kontaktieren, könnten auf den Radius des Drahtes abgestimmt sein. Gewissermaßen wird so der Kontaktbereich optimiert und die Geschwindigkeit des aufstrebenden Drahtes durch Reibungsverluste gedrosselt.

Von besonderem Vorteil ist es, wenn die den Draht aufnehmenden Rundbögen den Draht umschließen. Dabei wird ein Winkelbereiche von ca. 150° bis ca. 180° bevorzugt zu. Bei 190° muss sichergestellt werden, dass der Abstand des Rundbogens im Bereich des über 180° hinausgehenden Umschließungswinkels den Draht bequem in den Rundbogen einlässt. Dies ist bei einem Umschließungswinkel von 180° nicht ausdrücklich zu erwähnen, da der Durchmesser bzw. der Radius des Rundbogens ohnehin ein klein wenig größer sein muss als der es Drahtes. Auf jeden Fall darf es weder für den aus der Wunschposition aufstrebenden Draht ein Problem sein, in die aufnehmenden Rundbögen zu gelangen, noch darf die Demontage behindert werden. Je größer die Kontaktfläche des Drahtes zum aufnehmenden Rundbogen ist, desto größer die Sperrwirkung gegen Kräfte, die seitlich einwirken. Besonders zweckmäßig hat sich einem Winkelumschließungsbereich von ca. 150° bis ca. 160° herausgestellt.

Auch die Abmessungen des ersten und des zweiten Schenkels könnten bevorzugt eine Weite haben, die den Durchmesser des aufzunehmenden Drahtes um ca. 0,5 bis ca. 1,2 mm übersteigt. Das Einfädeln und Entnehmen der Drähte ist dadurch sehr leicht und kräfteschonend möglich.

Im Hinblick auf eine weitere Maßnahme, den unerwünschten Austritt des Drahtes aus der Ausstanzung zu verhindern, könnte der erste Schenkel bezogen auf die Außenkante des Weinbaupfahles einen schrägen, zum dritten Schenkel orientierten Verlauf aufweisen. Bei der speziellen Sickenformgebung könnte die Bezugsaußenkante der Kamm der Sicke sein. In Messgrößen ausgedrückt könnte der Eintrittswinkel zwischen einer Bezugslinie senkrecht zur Außenkante und der Mittellinie des zweiten Schenkels ca. 30° bis ca. 75° betragen. In der Praxis hat sich ein Eintrittswinkel von ca. 45° bewährt. Der schräge Verlauf des ersten Schenkels ist auch im Hinblick auf das Einfädeln von unten keine zu große Umstellung.

Die Erfindung geht unter anderem von der Erkenntnis aus, dass es im Weinbau so gut wie ausgeschlossen ist, dass die verwendeten Weinbaupfähle unter einem absolut korrekten, rechten Winkel in Bezug auf die Längsrichtung der durchlaufenden Drähte eingeschlagen werden. Sie sind daher regelmäßig in gewissem Umfang in Bezug auf die Längsrichtung verdreht angeordnet. Die Wunschposition des Drahtes im untersten Punkt des Bogens des dritten Schenkels kann also nicht immer optimal erreicht werden. Durch den nahezu spielfreien Sitz des Drahtes in den aufnehmenden Rundbögen als Auffangeinrichtungen für den aufstrebenden Draht ergibt sich eine wirksame Behinderung weiterer unerwünschter Drahtbewegungen.

Der Draht kann sich nun nicht mehr ungewollt in der Ausstanzung verlagern, aus dieser herausarbeiten und schließlich herabfallen. Mehrere Maßnahmen innerhalb der drei Schenkel vermeiden den Austritt des Drahtes. Dennoch wird das manuelle Einhängen der Drähte in die Ausnehmungen im ungespannten Zustand nicht mehr behindert als bisher. Die Montage kann daher werkzeuglos und schnell durch ungeübtes Personal erfolgen.

Der Weinbaupfahl besteht zweckmäßig aus verzinktem Stahlblech einer Dicke von 1 bis 3 mm, vorteilhaft einer solchen von 1,4 bis 2,2 mm. Neben einer kostengünstigen Verfügbarkeit weist er dadurch eine große Robustheit in Bezug auf die Verwendung der üblichen Arbeitsgeräte auf, die in Weinbergen zur Anwendung gelangen, insbesondere in Bezug auf das Auftreffen der Schläger von Traubenvollerntern.

Im Hinblick auf die konstruktive Ausbildung des erfindungsgemäßen Weinbaupfahl wird ausgeführt, dass die Außenkante des Grundkörpers durch eine Sicke gebildet sein könnte und dass die Ausstanzungen, in Längsrichtung betrachtet, eine Hakennase umschließen, die Teil der Wangen der Sicke sind.

Die Ausstanzungen umschließen eine Hakennase, die von der Außenseite des Weinbaupfahls nach innen vorspringt.

Die Außenkante des Grundkörpers des Weinbaupfahls kann durch eine Sicke gebildet sein, wobei die, in Längsrichtung des Grundkörpers betrachtet, außerhalb der Hakennase liegenden Wangen der Sicke einen kleineren Winkel miteinander einschließen als die innerhalb der Hakennase liegenden Wangen der Sicke. Hierdurch ergibt sich weiter verbesserte Selbsthemmung des eingelegten Drahtes bei leichter Einfüg- und Entnehmbarkeit.

Der Querschnitt der Sicke ist an dem den Weinbaupfahl begrenzenden Ende gerundet ausgebildet, wobei der Innenradius zumindest das Zweifache der Wandstärke beträgt.

Die in Längsrichtung außerhalb der Hakennase liegenden Wangen der Sicke können einen Winkel miteinander einschließen, der um 2 bis 5° kleiner ist als derjenige der innerhalb der Längsrichtung Hakennase liegenden Schenkel. Zweckmäßig beträgt der Winkel zwischen den Wangen der Sicke außerhalb der Hakennase 10 bis 20°, vorteilhaft 14 bis 16°. Dadurch wird neben einer besonders guten statischen Tragfähigkeit und Robustheit des Weinbaupfahls die Selbsthemmung des gespannten Drahtes in den beiden in Längsrichtung aufeinanderfolgenden Klemmbereichen der Ausstanzungen nochmals verbessert. Die Wangen der Sicke haben an der Basis innen einen Abstand von 4,5 mm bis 6 mm voneinander.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung zweier Ausführungsbeispiele der Erfindung anhand der Zeichnung zu verweisen. In Verbindung mit der Erläuterung des angeführten Ausführungsbeispiels der Erfindung werden auch im allgemeinen bevorzugte Ausgestaltungen und Weiterbildungen der Lehre erläutert. In der Zeichnung zeigen
- Fig. 1: einen Ausschnitt aus einer Vorderansicht eines erfindungsgemäßen Weinbaupfahls gemäß einem ersten Ausführungsbeispiel,
- Fig. 2: eine Schnittdarstellung des Gegenstandes aus Fig. 1 entlang der Schnittebene B - B,
- Fig. 3: ein vergrößertes Detail aus Fig. 1 im Bereich einer Ausstanzung und
- Fig. 4: ein Detail einer Ausstanzung eines erfindungsgemäßen Weinbaupfahls gemäß einem zweiten Ausführungsbeispiels.

Die Fig. zeigen Ausschnitte aus einem Weinbaupfahl mit einem säulenförmigen Grundkörper 1 aus geformtem Blech, an dem innenliegende Haken 2 zur temporären Aufnahme eines Drahtes 3 vorgesehen sind. Die Haken 2 sind als L-förmige Ausstanzungen an den Seiten des Grundkörpers 1 ausgebildet sind und weisen einen ersten Schenkel 4, einen zweiten Schenkel 5 sowie einen dritten Schenkel 6 auf. Der erste Schenkel 4 erstreckt sich von der Außenkante des Grundkörpers 1 in Richtung seines Inneren. Der zweite Schenkel 5 erstreckt sich parallel zur Längsrichtung des Grundkörpers 1 erstreckt Und der dritte Schenkel 6 erstreckt sich vom Ende des zweiten Schenkels 5 in Richtung der Außenkante des Grundkörpers 1. Der dritte Schenkel 6 weist am der Außenkante zugewandten Ende seiner dem ersten Schenkel 4 zugewandten Seite eine Ausbuchtung auf.

Erfindungsgemäß umfasst die Ausbuchtung einen Rundbogen R4 zur Aufnahme des Drahtes 3, der einen Radius aufweist, der den Radius des aufzunehmenden Drahtes 3 so gering übersteigt, dass zwischen dem Draht 3 und dem Rundbogen R4 kaum ein Spiel herrscht. Gemäß dem ersten und zweiten Ausführungsbeispiel weist dritte Schenkel 6 einen Bogen R2 auf, der sich vom Ende des zweiten Schenkels 5 zum aufnehmenden Rundbogen R4 als erster Draht-Auffangstation erstreckt. An den Rundbogen R4 schließt sich eine Stufe 7.1 an, die als Hindernis gegen das Austreten des Drahtes 3 aus dem Rundbogen R4 dient.

Für beide Ausführungsbeispiele zutreffend ist auch, dass der Scheitelpunkt S2 des Bogens R2 in etwa genauso weit von der Außenkante des Grundkörpers 1 im Bereich einer Sicke 10 wie von der Außenkante des Grundkörpers 1 im Bereich einer an die Sicke 10 anschließenden Biegung 11 entfernt ist. Die Stufe 7.1 fluchtet nicht ganz mit dem Scheitelpunkt S2, sondern erstreckt sich stärker in Richtung der Biegung 11.

Das zweite Ausführungsbeispiel des erfindungsgemäßen Weinbaupfahls zeigt, dass der Bogen R2 aus zwei Rundbögen R5, R6 und einer Stufe 8 gebildet ist. Die Stufe 8 ist zwischen dem zweiten Schenkel 5 und dem Rundbogen R6 angeordnet und dient als Hindernis gegen das Austreten des Drahtes 3 aus dem Rundbogen R6 bzw. dem Bogen R2. Der Rundbogen R5 befindet sich zwischen den Rundbögen R6 und R4. Der Bogen R2 bzw. der Rundbogen R5 endet in einem Abstand A vor einer Rückwand 4.1 des zweiten Schenkels 5 in einer Anschlagfläche der Stufe 8, die sich parallel zu der Rückwand 4.1 erstreckt.

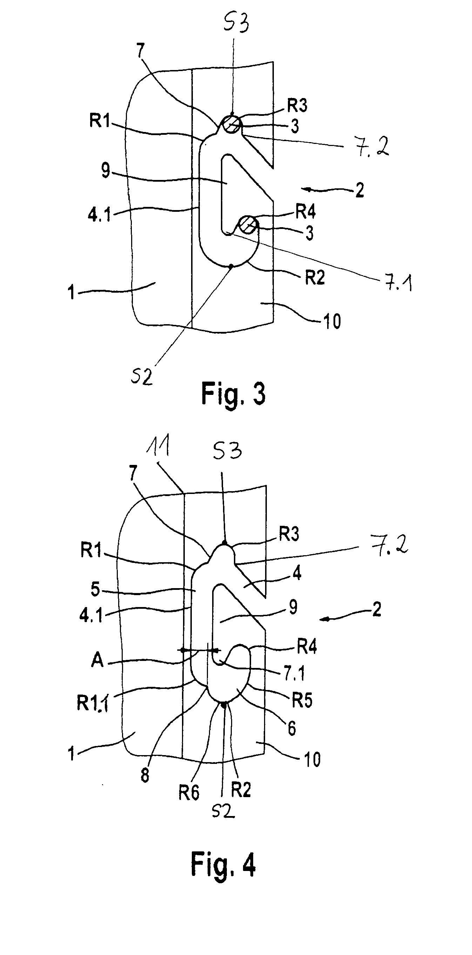

In Fig. 3 sind zwei mögliche Positionen an zwei Drahtauffangstationen - Rundbögen R4 und R3 - des Drahtes 3 zum besseren Verständnis quergeschnitten dargestellt.

Eine zweite Draht-Auffangstation wird bei beiden Ausführungsbeispielen durch den Rundbogen R3 gebildet, der zwischen dem ersten Schenkel 4 und dem zweiten Schenkel 5 vorgesehen ist. Der Rundbogen R3 weist einen Radius auf, der den Radius des aufzunehmenden Drahtes 3 so gering übersteigt, dass zwischen dem Draht 3 und dem Rundbogen R3 kaum ein Spiel herrscht. Der Rundbogen R3 ist mit seinem Scheitelpunkt S3 in etwa genauso weit von der Außenkante des Grundkörpers 1 im Bereich einer Sicke 10 wie von der Außenkante des Grundkörpers 1 im Bereich einer an die Sicke 10 anschließenden Biegung 11 entfernt ist. Der Rundbogen R3 umfasst von dem ersten Schenkel 4 abgewandt eine Stufe 7 und dem ersten Schenkel 4 zugewandt eine Stufe 7.2, die zur Hemmung der Bewegung des Drahtes 3 aus dem Rundbogen R3 heraus beitragen.

Durch die Stufen 7 und 7.1, 7.2, 8 wird eine Art Labyrinth-Effekt erzielt, der wesentlich zur Selbsthemmung der gespannten Drähte 3 beiträgt und verhindert, dass die z.B. im Bereich von Bodenmulden unter einer Zugspannung angehobenen Drähte 3 durch Seitenwind oder eine einseitige Belastung ohne weiteres aus der Ausstanzung herausfallen können.

Der zweite Schenkel 5 weist an seinen Enden Rundbögen R1 und R1.1 auf. Der Rundbogen R1.1 ist das Bindeglied zu Stufe 8 am dritten Schenkel 6 und der Rundbogen R1 ist das Bindeglied zur Stufe 7, die zum ersten Schenkel 4 führt. Die beiden Rundbögen R1 und R2 leiten den Draht 3, entweder bei der Montage zum dritten Schenkel 6 oder - bei unerwünschter Bewegung zur zweiten Draht-Auffangstation - Rundbogen R3 - oder bei Demontage zum ersten Schenkel 4.

Bei den vorliegenden Ausführungsbeispielen übersteigt der Radius der Rundbögen R3, R4 den Radius des Drahtes 3 um ca. 0,3 bis ca. 0,5 mm. Die Rundbögen R3, R4 umschließen den aufzunehmenden Draht 3 - wie in Fig. 3 beispielhaft gezeigt - in einem Winkelbereich von 180°. Der erste Schenkel 4 und der zweite Schenkel 5 haben hier beispielhaft eine Weite, die den Durchmesser des aufzunehmenden Drahtes 3 um ca. 0,5 mm übersteigt.

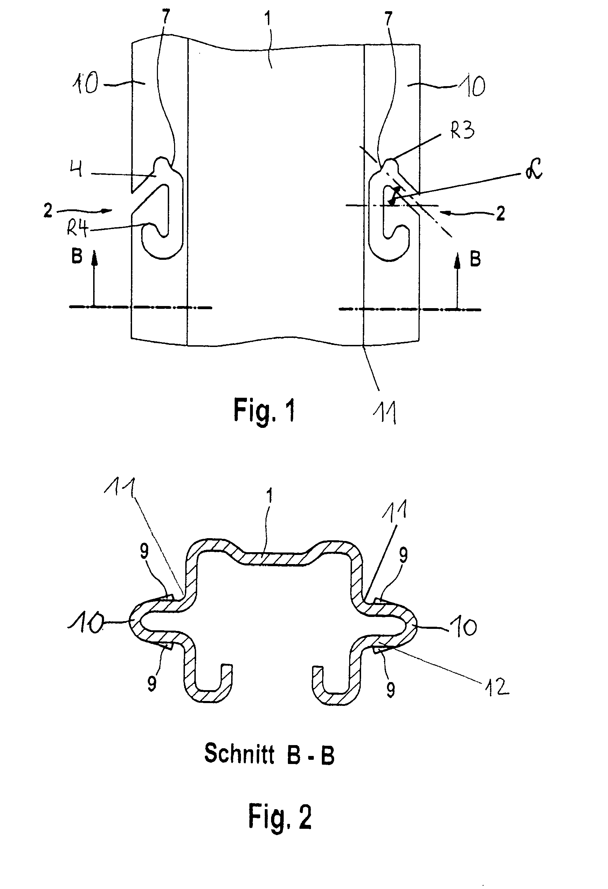

Aus den Fig. 1, 3, 4 ergibt sich, dass der erste Schenkel 4 einen schrägen, zum dritten Schenkel 6 (nach unten) orientierten Verlauf aufweist. Der Eintrittswinkel α des ersten Schenkels 4 zwischen einer nicht näher bezeichneten Bezugslinie senkrecht zur Außenkante des Grundkörpers 1 und der ebenfalls nicht näher bezeichneten Mittellinie des ersten Schenkels 4 beträgt hier beispielhaft 45°.

Aus Fig. 2 ergibt sich, dass der Weinbaupfahl mehrfach gebogen ist und dem Grunde nach eine ein U-Profil ausbildet. Die Außenkante des Grundkörpers 1 ist durch eine Sicke 10 gebildet. Die Ausstanzungen umschließen, in Längsrichtung betrachtet, eine Hakennase 9, die zur Verdeutlichung abragend dargestellt ist und die Teil der Wangen 12 der Sicke 10 sind.

Die Haken sind dem Grundkörper, in mehreren Etagen übereinander, symmetrisch einander gegenüberliegend zugeordnet. Dadurch können zwei Weinbergzeilen zugleich bei einem Durchgang des Personals bearbeitet und die entspannten Drähte nach Bedarf ein- oder ausgehängt werden. Die verschiedenen Schenkel 4, 5, 6 des Grundkörpers 1 gehen abgerundet ineinander über und enden stumpf im Inneren. Dadurch ist neben einer hohen Robustheit eine ausgezeichnete Sicherheit gegen unbeabsichtigte Schnittverletzungen des mit der Weinbergspflege befassten Personals gegeben.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf die voranstehend erörterten Ausführungsbeispiele eingeschränkt sind.

## Patentansprüche

1. Weinbaupfahl mit einem säulenförmigen Grundkörper (1) aus geformtem Blech, an dem innenliegende Haken (2) zur temporären Aufnahme eines Drahtes (3) vorgesehen sind, wobei die Haken (2) als in etwa L-förmige Ausstanzungen an den Seiten des Grundkörpers ausgebildet sind und einen ersten Schenkel (4), einen zweiten Schenkel (5) sowie einen dritten Schenkel (6) aufweisen, wobei sich der erste Schenkel (4) von der Außenkante des Grundkörpers (1) in Richtung seines Inneren erstreckt, wobei sich der zweite Schenkel (5) parallel zur Längsrichtung des Grundkörpers (1) erstreckt, wobei sich der dritte Schenkel (6) vom Ende des zweiten Schenkels (5) in Richtung der Außenkante des Grundkörpers (1) erstreckt und wobei der dritte Schenkel (6) am der Außenkante zugewandten Ende seiner dem ersten Schenkel (4) zugewandten Seite eine Ausbuchtung aufweist,
**dadurch gekennzeichnet,**
**dass** die Ausbuchtung einen Rundbogen (R4) zur Aufnahme des Drahtes (3) umfasst, dass der Rundbogen (R4) einen Radius aufweist, der den Radius des aufzunehmenden Drahtes (3) so gering übersteigt, dass zwischen dem Draht (3) und dem Rundbogen (R4) kaum ein Spiel herrscht.

2. Weinbaupfahl nach Anspruch 1, **dadurch gekennzeichnet, dass** der dritte Schenkel (6) einen Bogen (R2) aufweist, der sich vom Ende des zweiten Schenkels (5) zum Rundbogen (R4) erstreckt und dass an den Rundbogen (R4) eine Stufe (7.1) anschließt, die als Hindernis gegen das Austreten des Drahtes (3) aus dem Rundbogen (R4) dient.

3. Weinbaupfahl nach Anspruch 2, **dadurch gekennzeichnet, dass** der Scheitelpunkt (S2) des Bogens (R2) in etwa genauso weit von der Außenkante des Grundkörpers (1) im Bereich einer Sicke (10) wie von der Außenkante des Grundkörpers (1) im Bereich einer an die Sicke (10) anschließenden Vertiefung (11) entfernt ist und dass die Stufe (7.1) in etwa mit dem Scheitelpunkt (S2) fluchtet oder sich stärker in Richtung Biegung (11) erstreckt.

4. Weinbaupfahl nach Anspruch 2 oder 3, **dadurch gekennzeichnet, dass** der Bogen (R2) aus zwei Rundbögen (R5, R6) und einer Stufe (8) gebildet ist, wobei die Stufe (8) zwischen dem zweiten Schenkel (5) und dem Rundbogen (R6) angeordnet ist und als Hindernis gegen das Austreten des Drahtes (3) aus dem Rundbogen (R6) bzw. dem Bogen (R2) dient und wobei der Rundbogen (R5) sich zwischen den Rundbögen (R6) und (R4) erstreckt.

5. Weinbaupfahl nach Anspruch 4, **dadurch gekennzeichnet, dass** der Bogen (R2) bzw. der Rundbogen (R5) in einem Abstand (A) vor einer Rückwand (4.1) des zweiten Schenkels (5) in einer Anschlagfläche der Stufe (8) endet, die sich parallel zu der Rückwand (4.1) erstreckt.

6. Weinbaupfahl nach einem der Ansprüche 1 bis 5, **dadurch gekennzeichnet, dass** zwischen dem ersten Schenkel (4) und dem zweiten Schenkel (5) ein Rundbogen (R3) vorgesehen ist und dass der Rundbogen (R3) einen Radius aufweist, der den Radius des aufzunehmenden Drahtes (3) so gering übersteigt, dass zwischen dem Draht (3) und dem Rundbogen (R3) kaum ein Spiel herrscht.

7. Weinbaupfahl nach Anspruch 6, **dadurch gekennzeichnet, dass** der Rundbogen (R3) mit seinem Scheitelpunkt (S3) in etwa genauso weit von der Außenkante des Grundkörpers (1) im Bereich einer Sicke (10) wie von der Außenkante des Grundkörpers (1) im Bereich einer an die Sicke (10) anschließenden Biegung (11) entfernt ist.

8. Weinbaupfahl nach Anspruch 6 oder 7, **dadurch gekennzeichnet, dass** der Rundbogen (R3) von dem ersten Schenkel (4) abgewandt eine Stufe (7) umfasst, die zur Hemmung der Bewegung des Drahtes (3) aus dem Rundbogen (R3) heraus beiträgt.

9. Weinbaupfahl nach Anspruch 8, **dadurch gekennzeichnet, dass** die Stufe (7) zwischen dem Rundbogen (R3) und einem weiteren, sich im Bereich des zweiten Schenkels (5) erstreckenden Rundbogen (R1) angeordnet ist, wobei der Rundbogen (R1) den sich unerwünscht in Richtung des ersten Schenkels (4) bewegenden Draht (3) zum Rundbogen (R3) leitet.

10. Weinbaupfahl nach einem der Ansprüche 1 bis 9, **dadurch gekennzeichnet, dass** der Radius des Rundbogens (R3, R4) den Radius des Drahtes (3) um ca. 0,05 bis ca. 1,2 mm, vorzugsweise um ca. 0,1 bis ca. 0,8 mm, höchst vorzugsweise um ca. 0,3 bis ca. 0,5 mm, übersteigt.

11. Weinbaupfahl nach einem der Ansprüche 1 bis 10, **dadurch gekennzeichnet, dass** die Rundbögen (R3, R4) den aufzunehmenden Draht (3) in einem Winkelbereich von 90° bis 190°, vorzugsweise in einem Winkelbereich von 150 bis 180 ° zu umschließen geeignet sind.

12. Weinbaupfahl nach einem der Ansprüche 1 bis 11, **dadurch gekennzeichnet, dass** der erste und der zweite Schenkel (4, 5) eine Weite haben, die den Durchmesser des aufzunehmenden Drahtes (3) um ca. 0,5 mm bis ca. 1,2 mm übersteigt.

13. Weinbaupfahl nach einem der Ansprüche 1 bis 12, **dadurch gekennzeichnet, dass** der erste Schenkel (4) einen schrägen, zum dritten Schenkel (6) orientierten Verlauf aufweist.

14. Weinbaupfahl nach Anspruch 13, **dadurch gekennzeichnet, dass** der Eintrittswinkel (α) des ersten Schenkels (4) zwischen einer Bezugslinie senkrecht zur Außenkante des Grundkörpers (1) und der Mittellinie des ersten Schenkels (4) in einem Bereich von ca. 30° bis ca. 75° liegt, vorzugsweise 45° beträgt.

15. Weinbaupfahl nach einem der Ansprüche 1 bis 13, **dadurch gekennzeichnet, dass** die Außenkante des Grundkörpers (1) durch eine Sicke (10) gebildet ist und dass die Ausstanzungen, in Längsrichtung betrachtet, eine Hakennase (9) umschließen, die teil der Wangen (12) der Sicke (10) sind.
